# EUROPEAN PATENT APPLICATION

(11) **EP 1 589 533 A1**
(43) Date of publication of application: **26.10.2005**
(21) Application number: 03751489.0
(22) Date of filing: 14.10.2003
(51) Int. Cl.: G11B 11/105, G11B 21/12

(54) **MAGNETIC HEAD DEVICE**

(30) Priority: 30.01.2003 JP 2003021840
(71) Applicant: MATSUSHITA ELECTRIC INDUSTRIAL CO., LTD., Kadoma-shi, Osaka 571-8501 (JP)
(72) Inventor: MURAKAMI, Yutaka, Hirakata-shi, Osaka 573-0163 (JP); TOMITA, Hironori, Ikoma-shi, Nara 630-0141 (JP)
(74) Representative: Tothill, John Paul
(86) International application number: PCT/JP2003/013145
(87) International publication number: WO 2004/068486

(57) **Abstract**

A magnetic head (4) and a magnetic head holding member (41) are cantilevered by a joint member (40). The magnetic head (4) includes a head main body (5) attached to a free end and a supporting member (6) having a supporting member elastic portion (10). The magnetic head holding member (41) has an elastic spring portion (44) near the joint member (40) and is opposed to an information recording medium (1) with the supporting member (6) interposed therebetween. The magnetic head holding member (41) includes position holding portions (48) protruding toward the information recording medium. When the magnetic head (4) is in a first position where the head main body (5) is located close to or in contact with the information recording medium (1) so as to perform recording or reproducing, the position holding portions (48) contact a cartridge holder (49). This makes it possible to reduce the thickness of a magnetic head device and a magneto-optical recording/ reproducing apparatus. Further, due to the reduction of the number of components, the price of a magneto-optical recording/ reproducing apparatus can be lowered further.

## Description

### Technical Field

The present invention relates to a magnetic head device, and it relates in particular to a magnetic head device that can reduce the thickness of an information recording/ reproducing apparatus.

### Background Art

A magneto-optical recording/ reproducing apparatus includes an optical head on one side of a magneto-optical disk, which serves as an information recording medium, that is rotated by a driving mechanism for rotating the disk, and a magnetic head that is opposed to the optical head on the other side of the magneto-optical disk. The optical head emits a light beam for irradiating a magneto-optical recording layer of the information recording medium, and the magnetic head applies an external magnetic field to the magneto-optical recording layer.

The magneto-optical recording/ reproducing apparatus applies a magnetic field, whose direction is modulated in accordance with the information signal to be recorded, from the magnetic head onto the magneto-optical recording layer of the rotating magneto-optical disk, while it focuses and irradiates a light beam emitted from the optical head onto the magneto-optical recording layer.

This light beam irradiation heats a portion of the magneto-optical recording layer to a temperature above the Curie temperature, so that this portion loses its coercive force. After this portion has been magnetized in the direction of the magnetic field applied by the magnetic head, this portion is moved relative to the light beam by rotation of the magneto-optical disk, so that this portion is cooled below the Curie temperature and the magnetization direction is fixed. Thus, an information signal is recorded in the magneto-optical recording layer.

Since the magneto-optical disk is rotated, the surface thereof is likely to vibrate. Thus, in the magnetic head, a head main body is provided at a free end of a cantilevered supporting member that can move in the direction of axial runout of the magneto-optical disk. This head main body includes a slider that is provided with a magnetic field applying portion and glides in contact over the magneto-optical disk or floats while keeping a slight distance from the magneto-optical disk.

The magnetic head takes a first position in which the slider glides in contact over or floats on the magneto-optical disk so that the slider and the magneto-optical disk come close to each other in a recording state, a second position in which the free end of the supporting member and the head main body are spaced away from the magneto-optical disk by a magnetic head lifting/ lowering device of the magnetic head device so as to be in a reproducing state, and a third position in which the magnetic head and the magneto-optical disk are inclined while being kept substantially in parallel with each other so as to allow the magneto-optical disk to be mounted and removed.

A conventional magnetic head device is described in, for example, JP2000-851116 A.

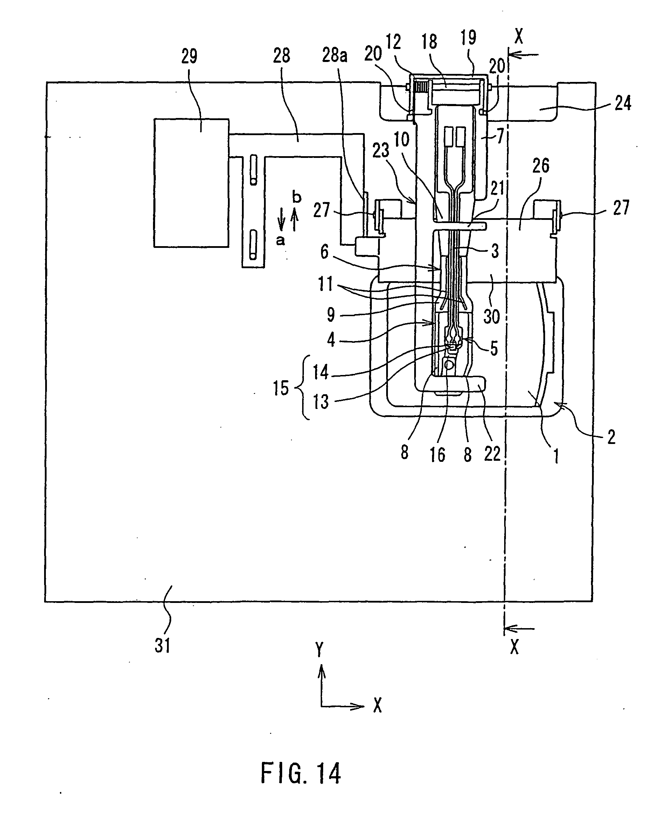

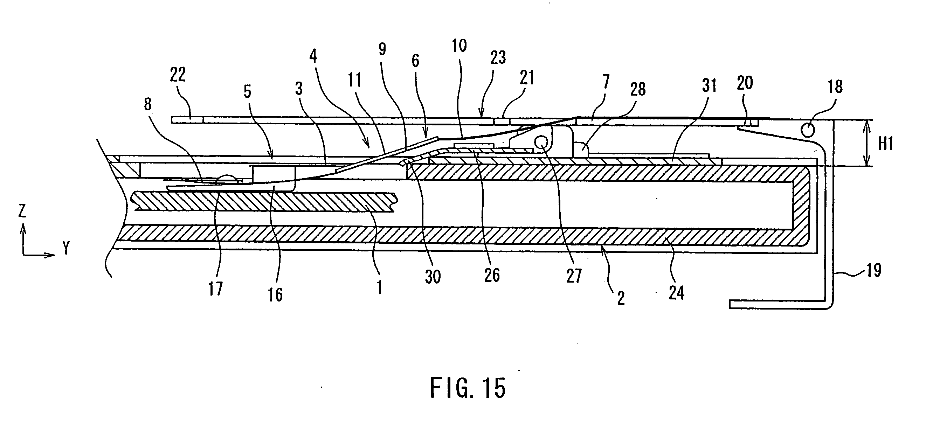

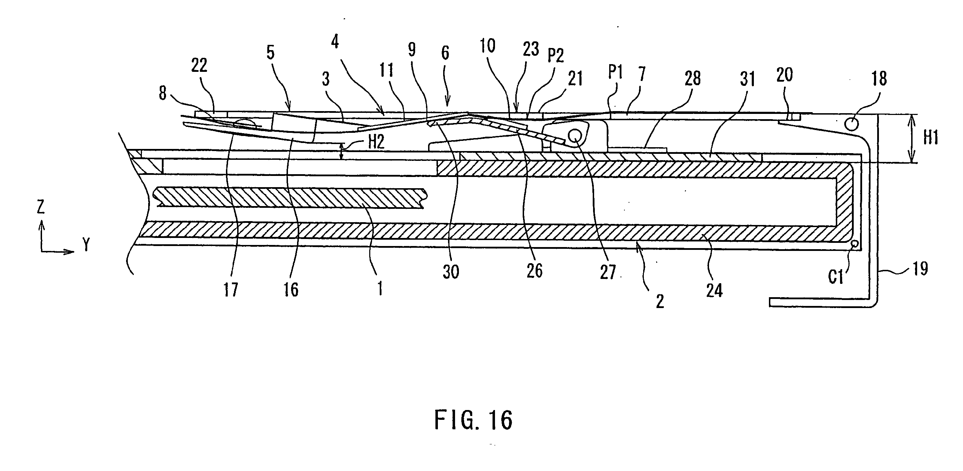

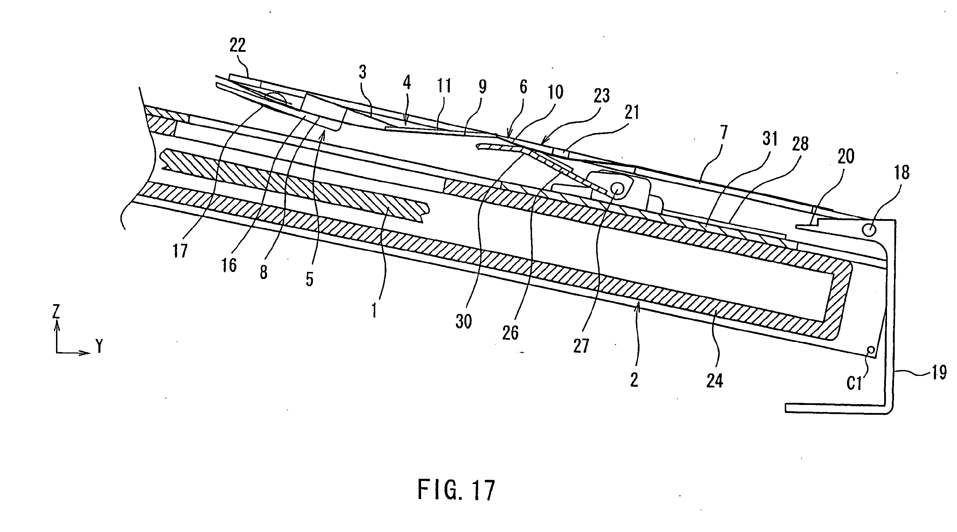

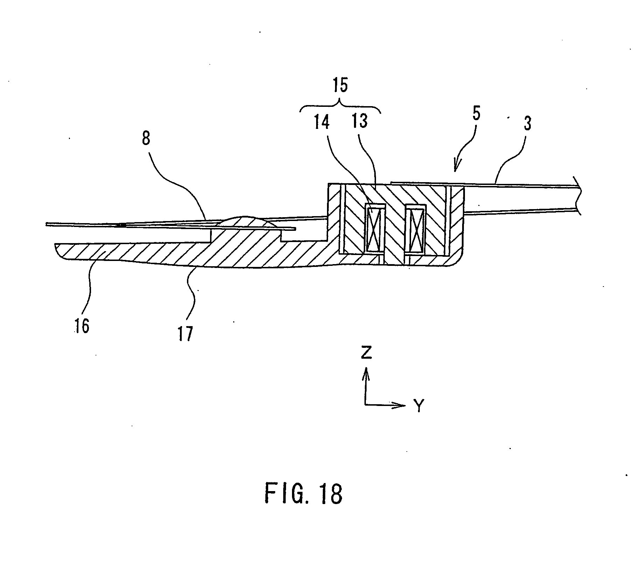

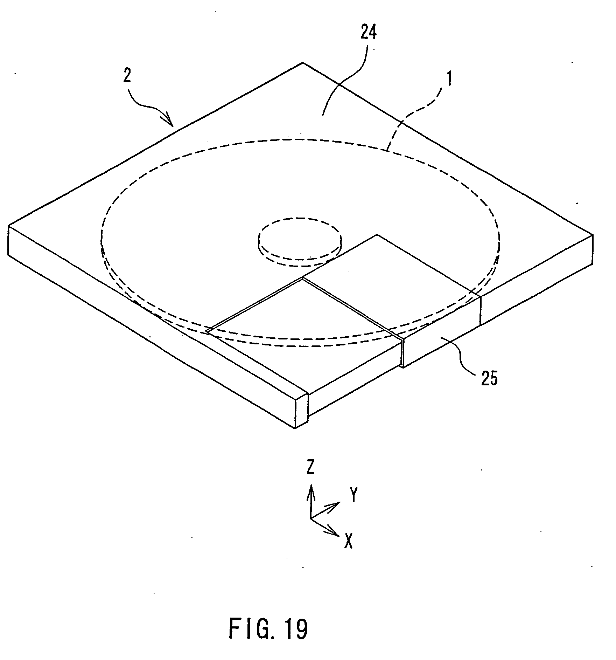

The following is a description of the conventional magnetic head device, with reference to FIGs. 14 to 19. FIG. 14 is a plan view of an example of the conventional magnetic head device. As shown in the figure, an XYZ three-dimensional rectangular coordinate system is defined such that an X axis indicates a radial direction of an magneto-optical disk 1, a Y axis indicates a tangential direction thereof, and a Z axis indicates a normal direction thereof. FIG. 15 is a sectional side view of the magnetic head device shown in FIG. 14, taken along a line X-X and seen from an arrow direction, in the first position (a recording position). FIG. 16 is a sectional side view of the magnetic head device shown in FIG. 14, taken along the line X-X and seen from the arrow direction, in the second position (a reproducing position). FIG. 17 is a sectional side view of the magnetic head device shown in FIG. 14, taken along the line X-X and seen from the arrow direction, in the third position (a position allowing the magneto-optical disk to be mounted and removed). FIG. 18 is a sectional side view of a head main body of the magnetic head shown in FIG. 14. FIG. 19 is a perspective view of an example of a general cartridge.

The conventional magnetic head device includes a head main body 5, a thin supporting member 6 for urging a sliding portion 17 of the head main body 5 toward the surface of the magneto-optical disk 1, and a fastening member 7 to which one end of the supporting member 6 is attached. The head main body 5 is attached to the other end (free end) of the cantilevered supporting member 6 by gluing, welding or the like.

As shown in FIG. 18, the head main body 5 includes a magnetic head element 15 formed by attaching a wound coil 14 to a central magnetic pole of an E-shaped magnetic core 13 made of a soft magnetic material such as ferrite and a slider 16 that has the sliding portion 17 gliding directly in contact over the magneto-optical disk 1 and is made of a resin with excellent sliding characteristics, for example, polyphenylene sulfide or liquid crystal polymer. This magnetic head element 15 is attached integrally to the slider 16 by glue-fixing or integral molding of a resin.

The supporting member 6 is formed with a thin plate made of a material such as SUS304 or BeCu.

The supporting member 6 has a first spring system 10 serving as a first elastic portion that has one end fastened to the fastening member 7 and is provided for following axial runout of the magneto-optical disk 1 and applying a load to the head main body 5 in the direction of the magneto-optical disk 1 in the first position for recording on the magneto-optical disk 1, an intermediate portion 9 that is extended from the first spring system 10 while being inclined with respect to this first spring system 10 at a predetermined angle so as not to interfere with a cartridge 2 and formed to be a rigid body by being provided with draw ribs 11 formed by draw forming on both sides in the width direction, and a second spring system 8 serving as a second elastic portion that is extended from the intermediate portion 9 and provided for following the surface shape of the magneto-optical disk 1.

A flexible printed board 3 has one end adhered to the head main body 5 and the other end adhered to the vicinity of the fastening member 7 of the supporting member 6. One end of the flexible printed board 3 is soldered to both ends of lead wires of the coil 14, while the other end is connected to a magnetic head driving circuit, which is not shown in the figure.

The fastening member 7 is made of a metal plate of such as iron or stainless steel.

The fastening member 7 to which one end of the supporting member 6 is fastened is attached in a freely rotatable manner to a joint member 19 for joining the optical head, which is not shown, and the magnetic head 4 via a shaft 18 and forced toward the magneto-optical disk 1 by a spring 12. By the contact of the fastening member 7 with a backing portion 20 of the joint member 19, the fastening member 7 and the magnetic head 4 fastened thereto are positioned in a Z-axis direction.

An arm portion 23 extends from the fastening member 7 toward the head main body 5 along a Y-axis direction. The arm portion 23 includes a first magnetic head retainer 22 at its front end and a second magnetic head retainer 21 at a position on the side of the fastening member 7. The first magnetic head retainer 22 is formed along the X-axis direction so as to be located above the head main body 5 (more specifically, the second spring system 8). The second magnetic head retainer 21 is formed along the X-axis direction so as to be located above the first spring system 10.

The magneto-optical disk 1 is received in a cartridge 2 shown in FIG. 19. The cartridge 2 includes a cartridge main body 24 formed of a resin such as ABS or polycarbonate and a shutter 25 that is formed of a metal such as iron or stainless steel and attached to the cartridge main body 24 so as to open and close an opening (not shown) provided in the cartridge main body 24.

The following is a description of a magnetic head lifting/ lowering device for moving the magnetic head 4 from the first position to the second position.

A lifting mechanism 26 is disposed between the magnetic head 4 and a cartridge holder 23 for holding the cartridge 2 in which the magneto-optical disk 1 is received, and is attached in a freely rotatable manner around a lifting/ lowering rotation shaft 27 provided in the cartridge holder 23. A sliding member 28 is attached to the cartridge holder 23 and can slide in a direction indicated by an arrow *a* or an arrow *b* in FIG. 14 (a Y-axis direction in FIGs. 14 to 19) by a lifting/ lowering driving portion 29, which is constituted by a motor, a gear etc. and attached to the cartridge holder 23. In a part of the sliding member 28, an inclined surface 28a whose height in a Z-axis direction varies is formed along the Y-axis direction. The lifting mechanism 26 is forced by an elastic member such as a spring (not shown) so that its lower surface presses the inclined surface 28a of the sliding member 28. In this manner, a cam mechanism is formed in a portion where the inclined surface 28a of the sliding member 28 contacts the lifting mechanism 26. The lifting mechanism 26 and the sliding member 28 are formed with a thin resin plate or a thin metal plate made of stainless steel or iron, for example. In a portion of the lifting mechanism 26 where it contacts the magnetic head 4 when the magnetic head 4 is moved to the second position, a curved lifting/ lowering portion 30 is provided.

In the first position (the recording position) of the magnetic head 4, namely, in the state that the sliding portion 17 glides in contact over the magneto-optical disk 1 as shown in FIG. 15, the first spring system 10 for applying the load in the direction that the head main body 5 is brought into contact with the magneto-optical disk 1 and the second spring system 8 that is displaced according to the axial runout of the magneto-optical disk 1 and the change in surface shape thereof cause the sliding portion 17 to follow the axial runout of the magneto-optical disk 1 and the change in surface shape thereof and glide in contact over the disk constantly

In this case, the lifting/ lowering portion 30 of the lifting mechanism 26 is retracted on the side of the magneto-optical disk 1 so as not to contact the magnetic head 4.

The magnetic head 4 is moved from the first position (the recording position) to the second position (the reproducing position; see FIG. 16) as follows. The lifting/ lowering driving portion 29 drives the sliding member 28 to slide in the direction indicated by the arrow *a* shown in FIG. 14. The inclined surface 28a constituting the cam mechanism contacts the lower surface of the lifting mechanism 26 and lifts the lifting mechanism 26 so as to rotate the lifting mechanism 26 around the lifting/ lowering rotation shaft 27, so that the lifting/ lowering portion 30 moves away from the magneto-optical disk 1. Then, the lifting/ lowering portion 30 contacts the lower surface (the surface on the side of the magneto-optical disk 1) of the intermediate portion 9 of the magnetic head 4 so as to move the supporting member 6 away from the magneto-optical disk 1. In this moving process, the first spring system 10 contacts the second magnetic head retainer 21. Then, the center of rotation when the head main body 5 is moved away from the magneto-optical disk 1 shifts from an end portion (P1) of the first spring system 10 on the side of the fastening member 7 to a contacting portion (P2) of the first spring system 10 with the second magnetic head retainer 21. Furthermore, the lifting/ lowering portion 30 moves away from the magneto-optical disk 1, and the head main body 5 further moves away from the magneto-optical disk 1, so that the head main body 5 (or the second spring system 8) contacts the first magnetic head retainer 22. In this manner, the head main body 5 is lifted up to the position at which the head main body 5 is spaced away from the cartridge 2 by a gap H2, namely, the second position. At this time, the head main body 5 does not project upward beyond the arm portion 23, thereby achieving the reduction in thickness of the magnetic head device.

Next, the magnetic head 4 is moved from the second position (the reproducing position) to the third position (the position allowing the magneto-optical disk to be mounted and removed; see FIG. 17) as follows. When the cartridge holder 31 is inclined around a center of rotation C1 while the magnetic head 4 is kept lifted up at the second position by the lifting mechanism 26, the lifting/ lowering portion 30 of the lifting mechanism 26 attached to the cartridge holder 31 contacts the lower surface (the surface on the side of the magneto-optical disk 1) of the arm portion 23. When the cartridge holder 31 is further inclined, the lifting/ lowering portion 30 exceeds the force of the spring 12 and rotates the magnetic head 4, the arm portion 23 and the fastening member 7 that is formed integrally from the magnetic head 4 and the arm portion 23 around the shaft 18 with respect to the joint member 19. When the cartridge holder 31 is rotated to the third position, the lifting/ lowering portion 30 holds the magnetic head 4, the arm portion 23 and the fastening member 7 that is formed integrally from them substantially in parallel with the magneto-optical disk 1. In this manner, the cartridge 2 can be mounted into and removed from the cartridge holder 31 without causing a collision of the head main body 5 with the cartridge 2.

Accompanying the recent popularization of small-size portable appliances, apparatuses have become thinner and thinner, and the thickness of the magnetic head 4 and the height H1 from the upper surface of the cartridge 2 to the fastening member 7 have been reduced.

However, in the conventional magnetic head device described above, when the magnetic head 4 is in the third position, the distance from the shaft 18 to the backing portion 20 has to be short in order to prevent the backing portion 20 from interfering with the cartridge 2 and/or the cartridge holder 31. As a result, in the state where the fastening member 7 is forced by the spring 12 to be pressed against the backing portion 20, there is a large positional error of the free end of the cantilevered arm portion 23 along the Z-axis direction.

When the magnetic head 4 is in the second position, the head main body 5 has to be spaced away from the cartridge 2 by the gap H2 while being kept in contact with the first magnetic head retainer 22 of the arm portion 23. In the case where there is a large positional error of the free end of the arm portion 23 along the Z-axis direction, it becomes necessary to space the backing portion 20 and the shaft 18 away from the cartridge holder 31 so that the gap H2 can be secured even when the above-noted error is taken into consideration. As a result, the height H1 increases, causing a problem in that the thickness of the magnetic head device and the magneto-optical recording/ reproducing apparatus cannot be reduced.

Further, in the case where there is a large positional error of the free end of the arm portion 23 along the Z-axis direction, when the magnetic head 4 is in the first position and the second position, it is necessary to secure a gap between the free end of the arm portion 23 and an outer case (not shown) of the magneto-optical recording/ reproducing apparatus so that the free end of the arm portion 23 does not interfere with the outer case provided above the arm portion 23 even when the above-noted error is taken into consideration. As a result, there has been a problem in that the thickness of the magneto-optical recording/ reproducing apparatus cannot be reduced.

Moreover, in order to support the fastening member 7 in a freely rotatable manner and force it on the side of the magneto-optical disk 1, the shaft 18 and the spring 12 are needed. Accordingly, the number of components and assembly steps increase, leading to a problem in that the price of the magnetic head device and the magneto-optical recording/reproducing apparatus cannot be lowered.

### Disclosure of Invention

It is an object of the present invention to solve the conventional problems described above and to provide a magnetic head device that can reduce the thickness and price of a magneto-optical recording/ reproducing apparatus.

A magnetic head device according to the present invention includes (a) a cartridge holder for holding a cartridge in which an information recording medium is received, (b) a magnetic head including a cantilevered supporting member having one end serving as a fastened end, the other end serving as a free end and a supporting member elastic portion between the fastened end and the free end, the fastened end being attached to a joint member moving in a direction substantially in parallel with a surface of the information recording medium, and a head main body that is attached to the free end of the supporting member and applies a magnetic field to the information recording medium, and (c) a magnetic head holding member that is cantilevered by the joint member so as to extend from the joint member toward the head main body substantially in parallel with the surface of the information recording medium, is opposed to the information recording medium with the supporting member interposed therebetween and has an elastically deformable elastic spring portion near the joint member. The magnetic head has a first position in which the head main body is located close to or in contact with the information recording medium so as to perform recording or reproducing, a second position in which the head main body is away from the information recording medium and a third position in which the magnetic head and the information recording medium are inclined while being kept substantially in parallel with each other so as to allow the cartridge to be mounted into or removed from the cartridge holder. The magnetic head holding member includes a position holding portion protruding toward the information recording medium on the side of the joint member with respect to the head main body in a longitudinal direction of the magnetic head.

In the first magnetic head device according to the present invention, when the magnetic head is in the first position, the position holding portion contacts the cartridge holder.

Also, in a second magnetic head device according the present invention, a hole is formed in a region of the cartridge holder where the movement of the joint member causes the position holding portion to move. The cartridge is held in the cartridge holder, and when the magnetic head is in the first position, the position holding portion passes through the hole and then contacts the cartridge.

### Brief Description of Drawings

FIG. 1 is a plan view showing a magnetic head device in a first embodiment of the present invention.
FIG. 2 is a sectional side view of the magnetic head device in the first embodiment of the present invention, taken along a line X-X and seen from an arrow direction in FIG. 1 when a magnetic head is in a first position.
FIG. 3 is a sectional side view of the magnetic head device in the first embodiment of the present invention, taken along the line X-X and seen from the arrow direction in FIG. 1 when the magnetic head is in a second position.
FIG. 4 is a sectional side view of the magnetic head device in the first embodiment of the present invention, taken along the line X-X and seen from the arrow direction in FIG. 1 when the magnetic head is in a third position.
FIG. 5 is a plan view showing a major portion of a magnetic head device in a second embodiment of the present invention.
FIG. 6 is a sectional side view of the major portion of the magnetic head device in the second embodiment of the present invention, taken along a line X-X and seen from an arrow direction in FIG. 5 when a magnetic head is in a first position.
FIG. 7 is a plan view showing a major portion of a magnetic head device in a third embodiment of the present invention.
FIG. 8 is a sectional side view of the major portion of the magnetic head device in the third embodiment of the present invention, taken along a line X-X and seen from an arrow direction in FIG. 7 when a magnetic head is in a first position.
FIG. 9 is a plan view showing a major portion of a magnetic head device in a fourth embodiment of the present invention.
FIG. 10 is a sectional side view of the major portion of the magnetic head device in the fourth embodiment of the present invention, taken along a line X-X and seen from an arrow direction in FIG. 9 when a magnetic head is in a first position.
FIG. 11 is a plan view showing a major portion of a magnetic head device in a fifth embodiment of the present invention.
FIG. 12 is a sectional side view of the major portion of the magnetic head device in the fifth embodiment of the present invention, taken along a line X-X and seen from an arrow direction in FIG. 11 when a magnetic head is in a first position.
FIG. 13 is a perspective view showing a cartridge used preferably in the magnetic head device in the fifth embodiment of the present invention.
FIG. 14 is a plan view showing an example of a conventional magnetic head device.
FIG. 15 is a sectional side view of the conventional magnetic head device, taken along a line X-X and seen from an arrow direction in FIG. 14 when a magnetic head is in a first position (a recording position).
FIG. 16 is a sectional side view of the conventional magnetic head device, taken along the line X-X and seen from the arrow direction in FIG. 14 when the magnetic head is in a second position (a reproducing position).
FIG. 17 is a sectional side view of the conventional magnetic head device, taken along the line X-X and seen from the arrow direction in FIG. 14 when the magnetic head is in a third position (a position allowing a magneto-optical disk to be mounted and removed).
FIG. 18 is a sectional side view of a head main body of the magnetic head of the conventional magnetic head device.
FIG. 19 is a perspective view showing an example of a general cartridge.

### Best Mode for Carrying Out the Invention

In accordance with the above-described first and second magnetic head devices according to the present invention, it is possible to reduce the gap between the cartridge and the portion of the joint member to which the magnetic head and the magnetic head holding member are attached, thus reducing the thickness of the magneto-optical recording/ reproducing apparatus. Also, since the magnetic head holding member that is cantilevered by the joint member has the elastic spring portion, the number of components and assembly steps can be reduced, thus achieving a low-cost magneto-optical recording/ reproducing apparatus.

In the above-described first and second magnetic head devices according to the present invention, it is preferable that the position holding portion is formed in one piece with the magnetic head holding member. This makes it possible to enhance the strength between the position holding portion and the magnetic head holding member and reduce the number of components.

In the above-described first magnetic head device according to the present invention, it is preferable that when the magnetic head is in the first position, the supporting member elastic portion is bent, and a recessed portion or a hole is formed in a region of the cartridge holder facing a portion of the bent supporting member elastic portion that is located closest to the information recording medium in a direction perpendicular to the surface of the information recording medium. This expands the tolerance with respect to the component error such as the variation in the bent amount of the supporting member, so that the production yield improves further. Consequently, the price of the magnetic head device can be lowered.

In the above-described first magnetic head device according to the present invention, it is preferable that in the second position, the position holding portion is spaced away from the cartridge holder. This reduces the wear of the position holding portion or the cartridge holder, improving the reliability of appliances.

In the above-described second magnetic head device according to the present invention, it is preferable that when the magnetic head is in the first position, the supporting member elastic portion is bent, and the hole extends in a region of the cartridge holder facing a portion of the bent supporting member elastic portion that is located closest to the information recording medium in a direction perpendicular to the surface of the information recording medium. This expands the tolerance with respect to the component error such as the variation in the bent amount of the supporting member, so that the production yield improves further. Consequently, the price of the magnetic head device can be lowered. Since this effect can be obtained even when the portion of the bent supporting member elastic portion that is located closest to the information recording medium and the position holding portion are located at substantially the same position in a longitudinal direction of the magnetic head, the degree of freedom in designing the magnetic head device is enhanced.

In the above-described second magnetic head device according to the present invention, it is preferable that the cartridge includes a backing portion on one surface thereof, the cartridge is held in the cartridge holder, and when the magnetic head is in the first position, the position holding portion passes through the hole and then contacts the backing portion. Accordingly, by selecting the material of the backing portion suitably, it is possible to prevent the generation of wear particles or noise caused by sliding of the position holding portion on the backing portion and reduce a driving force for moving the head main body when the head main body is moved in a radial direction of the information recording medium.

In the above-described second magnetic head device according to the present invention, it is preferable that in the second position, the position holding portion is spaced away from the cartridge. This reduces the wear of the position holding portion or the cartridge, improving the reliability of appliances.

The following is a description of embodiments of the present invention, with reference to the accompanying drawings.

### (First Embodiment)

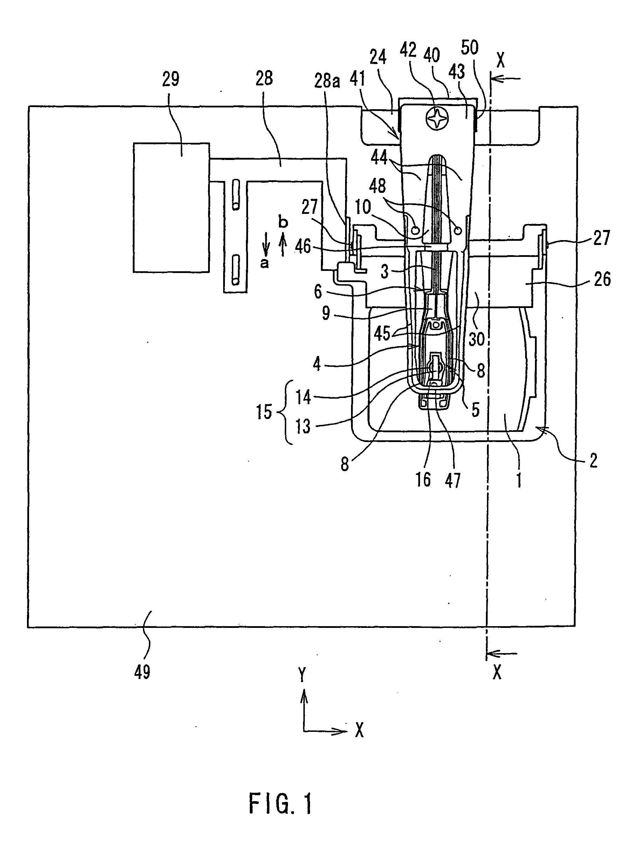

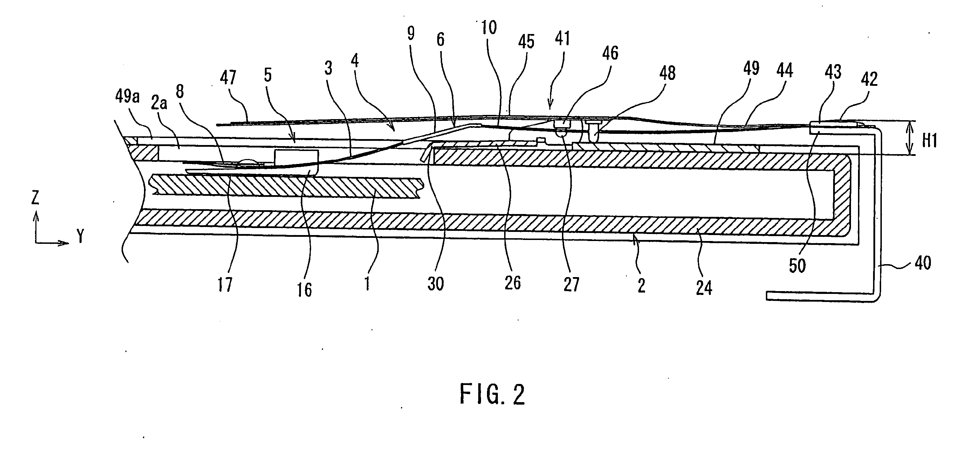

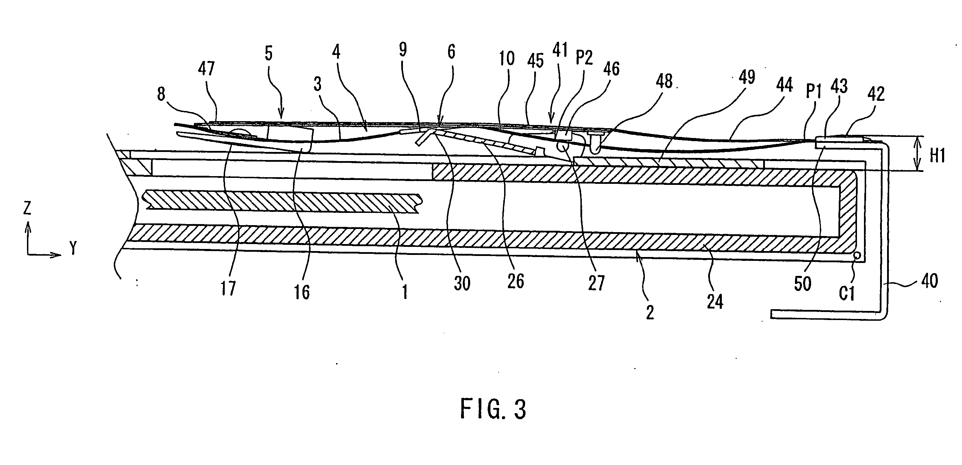

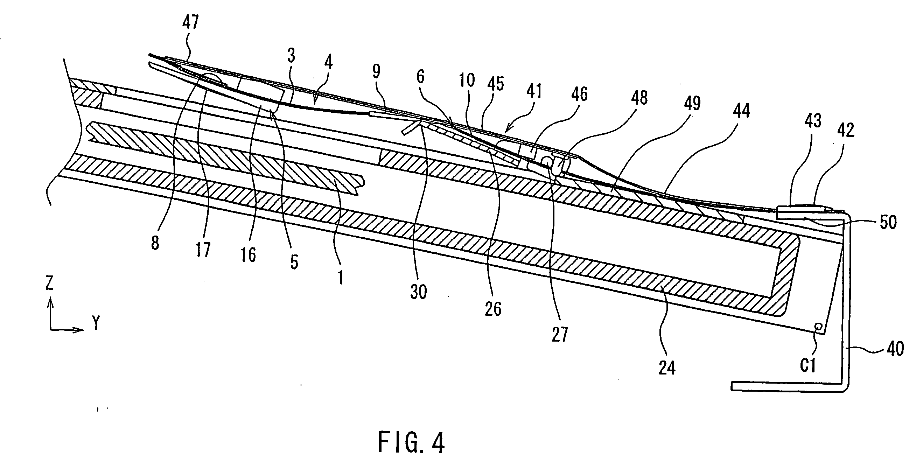

FIG. 1 is a plan view of a magnetic head device in a first embodiment of the present invention. As shown in the figure, an XYZ three-dimensional rectangular coordinate system is defined such that an X axis indicates a radial direction of an magneto-optical disk 1, a Y axis indicates a tangential direction thereof, and a Z axis indicates a normal direction thereof. For the convenience of description below, the Z-axis direction is set as a height direction, and the side farther from the magneto-optical disk 1 is referred to as an upper side, while the side closer thereto is referred to as a lower side. It should be noted that the terms "height", "upper" and "lower" are irrelevant to the orientation in which the magnetic head device is used in practice. FIG. 2 is a sectional side view of the magnetic head device shown in FIG. 1, taken along a line X-X and seen from an arrow direction, in a first position (a recording position), FIG. 3 is a sectional side view of the magnetic head device shown in FIG. 1, taken along the line X-X and seen from the arrow direction, in a second position (a reproducing position), and FIG. 4 is a sectional side view of the magnetic head device shown in FIG. 1, taken along the line X-X and seen from the arrow direction, in a third position (a position allowing the magneto-optical disk to be mounted and removed).

The same reference numerals are given to components having the same functions as in the conventional example shown in FIGs. 14 to 19, and detailed descriptions thereof are omitted here.

In FIGs. 1 to 4, numeral 6 denotes a supporting member, which is made of a thin spring material such as SUS304 or BeCu, for example. The supporting member 6 illustrated in the present embodiment has a first spring system 10 serving as a first elastic deformable portion (a supporting member elastic portion) that has one end fastened to a joint member 40 and is provided for following axial runout of the magneto-optical disk 1 and applying a load in the direction of the magneto-optical disk 1 to the head main body 5 in the first position, an intermediate portion 9 that is extended from the first spring system 10 while being inclined with respect to this first spring system 10 at a predetermined angle so as not to interfere with a cartridge 2 and formed to be a rigid body by folding both side edges in the width direction substantially at a right angle, and a second spring system 8 serving as a second elastic deformable portion that is extended from the intermediate portion 9 at a predetermined angle with respect to the intermediate portion 9 and provided for following the axial runout and surface shape of the magneto-optical disk 1.

The joint member 40 is made of a metal plate of such as iron or stainless steel. The joint member 40 joins a magnetic head 4 and an optical head (not shown), which are provided so as to be opposed to each other with the magneto-optical disk 1 interposed therebetween. An end of the joint member 40 on the side of the magnetic head 4 is provided with a magnetic head fastening portion 50 extending toward the side of the head main body 5 substantially in parallel with the magneto-optical disk 1. The supporting member 6 and a magnetic head holding member 41 respectively are cantilevered by fastening their one end to the magnetic head fastening portion 50 with a fastening screw 42. The joint member 40 is moved in the X-axis direction by a driving device, which is not shown in the figure, and moves the head main body 5 and an optical head (not shown) in a direction perpendicular to a tangential line of an information track of the magneto-optical disk 1.

As shown in FIG. 18, the head main body 5 includes a magnetic head element 15 formed by attaching a wound coil 14 to a central magnetic pole of an E-shaped magnetic core 13 made of a soft magnetic material such as ferrite, and a slider 16 made of a resin with excellent sliding characteristics, for example, polyphenylene sulfide or liquid crystal polymer. The magnetic head element 15 is attached integrally to the slider 16 such that an open end of the E-shaped magnetic core 13 is opposed to the magneto-optical disk 1, thereby forming the head main body 5.

Numeral 17 denotes a sliding portion, which is formed integrally on a surface of the slider 16 opposing the magneto-optical disk 1. The sliding portion 17 has a circular arc section along a direction perpendicular to the magneto-optical disk 1, thereby gliding constantly in point contact over the magneto-optical disk 1 in a smooth manner.

Numeral 3 denotes a flexible printed board that is provided with wirings for transmitting a modulation signal to the head main body 5 and attached to the supporting member 6 by a double-face tape (not shown), for example. One end of the flexible printed board 3 is soldered to both ends of lead wires of the coil 14, while the other end is connected to a driving circuit of the magnetic head, which is not shown in the figure.

The head main body 5 is fastened to the side of a moving end (free end) of the cantilevered supporting member 6 by fusing or gluing or is formed in one piece therewith by integral molding of a resin. The joint member 40-side-end (fastened end) of the supporting member 6 is fastened to the magnetic head holding member 41 by laser spot welding, electric spot welding or the like and then to the joint member 40 by the fastening screw 42.

The magnetic head holding member 41 is made of a stainless steel plate or a phosphor bronze plate having a thickness of about 0.05 to 0.2 mm. The magnetic head holding member 41 includes a fastening portion 43, an elastic spring portion 44 and a rigid body portion 45 in this order. The circumferential edge of the fastening portion 43 is folded substantially at a right angle, and the magnetic head holding member 41 is fastened to the joint member 40 at this fastening portion 43. The rigid body portion 45 disposed on the side of the free end of the magnetic head holding member 41 is provided with an improved rigidity by drawing.

The rigid body portion 45 has a substantially "A" shape, and a bridge-like second magnetic head retainer 46 extending in the X-axis direction is provided in the rigid body portion 45 near the elastic spring portion 44. The second magnetic head retainer 46 is disposed so as to be located higher than the first spring system 10 of the supporting member 6.

Further, a bridge-like first magnetic head retainer 47 extending in the X-axis direction is provided near the front end (free end) of the rigid body portion 45. The first magnetic head retainer 47 is located higher than the second spring system 8 of the supporting member 5 and, when the magnetic head 4 is in the second position, contacts the second spring system 8 and controls the position of the head main body 5 in the Z-axis direction.

Numeral 48 denotes position holding portions that protrude toward the magneto-optical disk 1 in a direction substantially perpendicular to the surface of the magneto-optical disk 1, are formed of metal such as iron or stainless steel and are fixed to the magnetic head holding member 41 by laser spot welding, electric spot welding or the like. Alternatively, the position holding portions 48 may be formed in the magnetic head holding member 41 by fusing or integral molding of a resin.

The rigid body portion 45 is forced toward the magneto-optical disk 1 by an elastic force of the elastic spring portion 44. When the magnetic head 4 is in the first position, the position holding portions 48 contact a cartridge holder 49, which is formed by sheet-metal working of a stainless steel plate or an iron plate having a thickness of about 0.3 to 1.0 mm, and support the elastic force of the elastic spring portion 44 as shown in FIG. 2. At this time, the magnetic head holding member 41 is positioned in the Z direction while being spaced away from the magnetic head 4 in the Z-axis direction.

Numeral 26 denotes a lifting mechanism formed of stainless steel, iron or resin, for example. The lifting mechanism 26 is attached in such a manner as to be freely rotatable within the YZ plane around a lifting/lowering rotation shaft 27 provided in the cartridge holder 49 for holding the cartridge 2. The lifting mechanism 26 has a lifting/ lowering portion 30 extending along the X-axis direction on the side of the head main body 5 with respect to the lifting/ lowering rotation shaft 27 in the Y-axis direction and between the magnetic head 4 and the cartridge 2 in the Z-axis direction.

Numeral 28 denotes a sliding member that is formed of stainless steel, iron or resin, for example, attached to the cartridge holder 49 in such a manner as to be slidable in the Y-axis direction and slides by a lifting/lowering driving portion 29, which is constituted by a motor, a gear etc.

In a part of the sliding member 28, an inclined surface 28a whose height in the Z-axis direction varies is formed along the Y-axis direction. The lifting mechanism 26 is forced by an elastic member such as a spring (not shown) so that its lower surface presses the inclined surface 28a of the sliding member 28. In this manner, a cam mechanism is formed in a portion where the inclined surface 28a of the sliding member 28 contacts the lifting mechanism 26.

As shown in FIG. 2, in the first position (the recording position) of the magnetic head 4, the lifting/ lowering portion 30 of the lifting mechanism 26 does not contact the supporting member 6 and is spaced away from the magnetic head 4. The head main body 5 is inserted in an opening 49a provided in the cartridge holder 49 and an opening 2a of the cartridge 2 and contacts the magneto-optical disk 1.

Now, the magnetic head 4 is moved from the first position (the recording position) to the second position (the reproducing position; see FIG. 3) as follows. The movement of the sliding member 28 in the direction indicated by the arrow *a* in FIG. 1 causes the inclined surface 28a to raise the lifting mechanism 26. The lifting mechanism 26 rotates in the direction that the lifting/ lowering portion 30 is moved away from the magneto-optical disk 1. Then, the lifting/ lowering portion 30 moves closer to, contacts and lifts up the supporting member 6, thereby pressing the first spring system 10 against the second magnetic head retainer 46. The second magnetic head retainer 46 is forced toward the magneto-optical disk 1 by the elastic force of the elastic spring portion 44. Since the elastic force of the elastic spring portion 44 is larger than that of the first spring system 10, the first spring system 10 is elastically deformed (the first spring system 10 bends in the present embodiment). Since the contact between the first spring system 10 and the second magnetic head retainer 46, the center of rotation when the head main body 5 is moved away from the magneto-optical disk 1 shifts from an end portion (P1) of the first spring system 10 on the side of the joint member 40 to a contacting portion (P2) of the first spring system 10 with the second magnetic head retainer 46. When the lifting mechanism 26 rotates further, the lifting/ lowering portion 30 moves away from the magneto-optical disk 1, so that the head main body 5 (or the vicinity of the front end portion of the second spring system 8) contacts the first magnetic head retainer 47. Furthermore, the lifting/ lowering portion 30 rises so as to contact the rigid body portion 45, and the lifting/ lowering portion 30 elastically deforms the elastic spring portion 44 so as to lift up the rigid body portion 45, thus spacing the position holding portion 48 away from the cartridge holder 49. In this manner, the second position (the reproducing position) shown in FIG. 3 is achieved.

Next, the magnetic head 4 is moved from the second position (the reproducing position) to the third position (the position allowing the magneto-optical disk to be mounted and removed; see FIG. 4) as follows. While the magnetic head 4 is kept lifted up at the second position by the lifting mechanism 26, the cartridge holder 31 is inclined around a center of rotation C1. At this time, the lifting mechanism 26 attached to the cartridge holder 31 also rotates with the cartridge holder 31, so that the lifting/lowering portion 30 of the lifting mechanism 26 pushes up the supporting member 6 and the magnetic head holding member 41. As a result, the first spring system 10 of the supporting member 6 and the elastic spring portion 44 of the magnetic head holding member 41 are elastically deformed, so that the magnetic head 4 and the magnetic head holding member 41 rotate while being kept in parallel with the magneto-optical disk 1. In this manner, the third position (the position allowing the magneto-optical disk to be mounted and removed) shown in FIG. 4 is achieved. In this state, the cartridge 2 can be mounted into and removed from the cartridge holder 31 without causing a collision of the head main body 5 with the cartridge 2.

When the magnetic head 4 is in the first position (see FIG. 2), a portion that protrudes the most beyond (or is the farthest from) the upper surface of the cartridge 2 is the fastening screw 42. The thickness of the magnetic head 4 is defined by the height H1 from the upper surface of the cartridge 2 to the upper surface of the fastening screw 42. Since the position of the magnetic head holding member 41 along the Z-axis direction and its positional accuracy are determined by the length of the position holding portion 48 along the Z-axis direction and its dimensional accuracy, it is possible to reduce the length of the magnetic head fastening portion 50 of the joint member 40 along the Y-axis direction compared with the conventional case. Consequently, even when the magnetic head fastening portion 50 is brought closer to the cartridge 2 (in other words, the height H1 is reduced), the fastening portion 50 does not interfere with the cartridge 2 in the third position (see FIG. 4). Thus, by reducing the height H1 and the length of the position holding portion 48 in the Z-axis direction, it is possible to achieve a still thinner magneto-optical recording/ reproducing apparatus.

Also, the magnetic head holding member 41 provided integrally with the elastic spring portion 44 is fastened directly to the joint member 40, thereby eliminating the need for the shaft 18 and the spring 12 in the present embodiment, which are provided in the conventional magnetic head device shown in FIGs. 14 to 17 for supporting the fastening member 7 in such a manner as to be rotatable with respect to the joint member 19 and forcing the fastening member 7 toward the magneto-optical disk 1. Consequently, the number of components and assembly steps can be reduced.

Furthermore, when the magnetic head 4 is in the second position, since the position holding portion 48 is spaced away from the cartridge holder 49, the wear amount of the position holding portion 48 or the cartridge holder 49 caused by the repetitive movement of the magnetic head 4 in the X-axis direction decreases, improving the reliability of appliances.

The above description has been directed to the case where the head main body 5 glides in contact over the magneto-optical disk 1 when the magnetic head 4 is in the first position. However, the present invention is not limited to this but may include the case where recording or reproducing is carried out while the head main body 5 is spaced away by a slight distance and floats from the surface of the magneto-optical disk 1.

### (Second Embodiment)

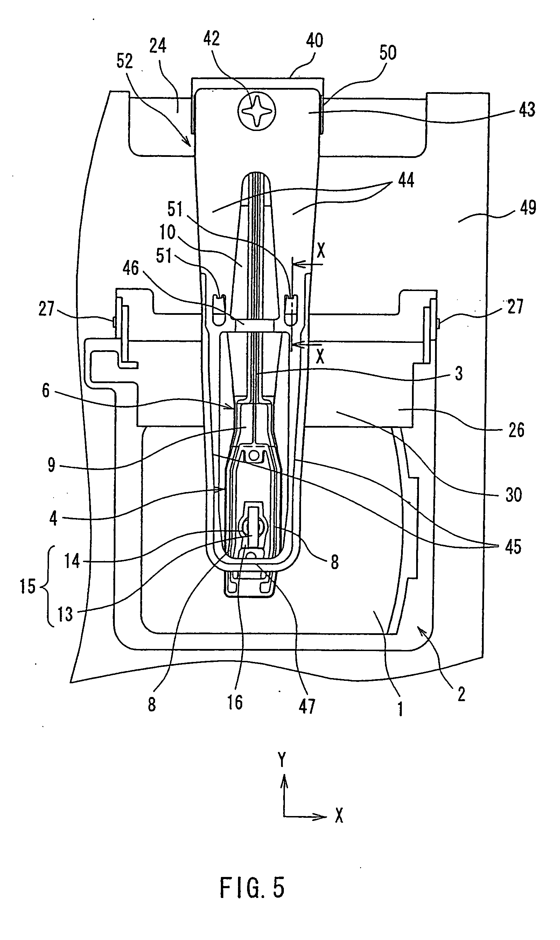

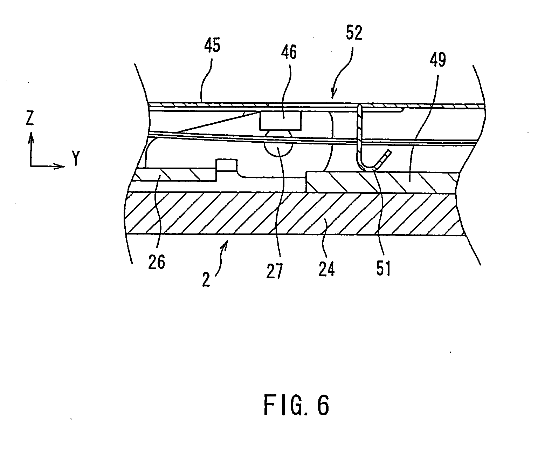

The following is a description of a magnetic head device according to a second embodiment of the present invention, with reference to FIGs. 5 to 6. FIG. 5 is a plan view of a major portion of a magnetic head device in the second embodiment of the present invention, and FIG. 6 is a sectional side view of the major portion of the magnetic head device shown in FIG. 5, taken along a line X-X and seen from an arrow direction.

In the magnetic head device of the second embodiment, position holding portions 51 are formed as one piece with a magnetic head holding member 52 by sheet-metal working. The position holding portions 51 are formed, for example, by cutting out partially the portion of the magnetic head holding member 52 located above the cartridge holder 49 into a substantially "U" shape using a sheet-metal working technique or the like and bending this so as to protrude toward the cartridge holder 49. Moreover, the position holding portions 51 are bent so that the portion contacting the cartridge holder 49 has a curved cross-section when the magnetic head 4 is in the first position.

Other structures and operations are similar to those in the first embodiment, and thus the description thereof will be omitted here.

As described above, in accordance with the magnetic head device of the second embodiment, since the position holding portions 51 are formed as one piece with the magnetic head holding member 52, it is possible to improve the strength between the position holding portions 51 and the magnetic head holding member 52 and reduce the number of components, compared with the first embodiment in which the position holding portions 48 and the magnetic head holding member 41 are produced individually and then connected into one piece.

Other than the above, the present embodiment produces an effect similar to the first embodiment.

### (Third Embodiment)

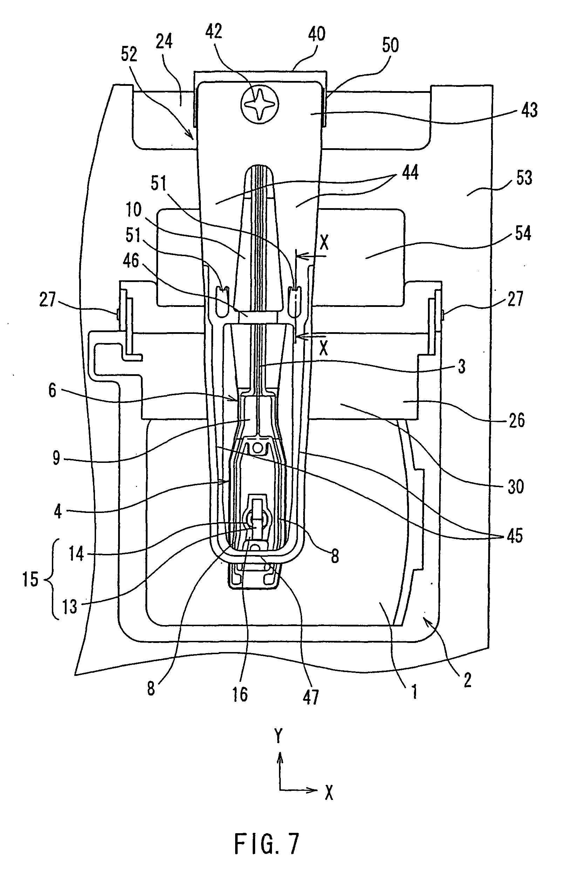

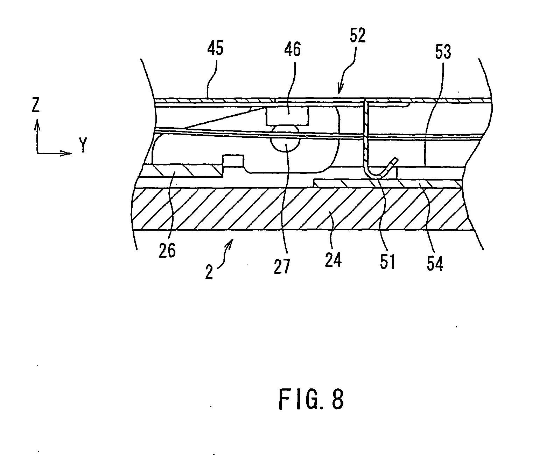

The following is a description of a magnetic head device according to a third embodiment of the present invention, with reference to FIGs. 7 to 8. FIG. 7 is a plan view of a major portion of a magnetic head device in the third embodiment of the present invention, and FIG. 8 is a sectional side view of the major portion of the magnetic head device shown in FIG. 7, taken along a line X-X and seen from an arrow direction.

In the magnetic head device of the third embodiment, a recessed portion 54 is formed by recessing a region of a cartridge holder 53 facing the portion of the bent first spring system 10 that is located closest to the magneto-optical disk 1 when the magnetic head 4 is in the first position. The recessed portion 54 can be formed by forging, for example.

When the magnetic head 4 is in the first position, the first spring system 10 of the supporting member 6 is bent so as to protrude toward the cartridge holder 53 and comes closer to the cartridge holder 53 so that the head main body 5 is pressed against the magneto-optical disk 1 to follow the axial runout of the magneto-optical disk 1. The recessed portion 54 is formed in the region of the cartridge holder 53 facing in the Z-axis direction the portion of the first spring system 10 that bends and comes closest to the cartridge holder 53. Since the magnetic head 4 moves in the radial direction of the magneto-optical disk 1 (the X-axis direction), the range in the X-axis direction in which the recessed portion 54 is formed corresponds to the range in which the portion of the first spring system 10 that comes closest to the cartridge holder 53 and the position holding portions 51 move in the X-axis direction. Also, along the Y-axis direction, the recessed portion 54 extends to the portion where the position holding portions 51 contact the cartridge holder 53. Thus, when the magnetic head 4 is in the first position, the position holding portions 51 contact the cartridge holder 53 inside the recessed portion 54.

Other structures and operations are similar to those in the first and second embodiments, and thus the description thereof will be omitted here.

As described above, in accordance with the magnetic head device of the third embodiment, since the recessed portion 54 is formed in the region of the cartridge holder 53 facing the portion of the first spring system 10 that comes closest to the magneto-optical disk 1 when the magnetic head 4 is in the first position, the clearance between the supporting member 6 (especially, the first spring system 10 thereof) and the cartridge holder 53 increases. Thus, when the magnetic head 4 is in the first position, it is possible to expand the tolerable error range with respect to the variation in the bent amount of the first spring system 10, which is determined considering the avoidance of collision between the first spring system 10 and the cartridge holder 53. Therefore, the production yield of the supporting member 6 improves.

Furthermore, when the magnetic head 4 is in the first position, the position holding portions 51 contact the cartridge holder 53 inside the recessed portion 54, thereby achieving a still thinner magneto-optical recording/ reproducing apparatus. Also, when the magnetic head 4 is in the first position, even in the case where the position of the portion of the first spring system 10 that comes closest to the magneto-optical disk 1 and that of the position holding portions 51 match or are close to each other in the Y-axis direction, it is possible to secure the clearance between the first spring system 10 and the cartridge holder 53. This increases the tolerance with respect to the bent and deformed shape of the first spring system 10 when the magnetic head 4 is in the first position, thus expanding the degree of freedom in designing the supporting member 6.

Other than the above, the present embodiment produces an effect similar to the first and second embodiments.

Incidentally, the position holding portions 51 may contact the cartridge holder 53 outside the region of the recessed portion 54.

### (Fourth Embodiment)

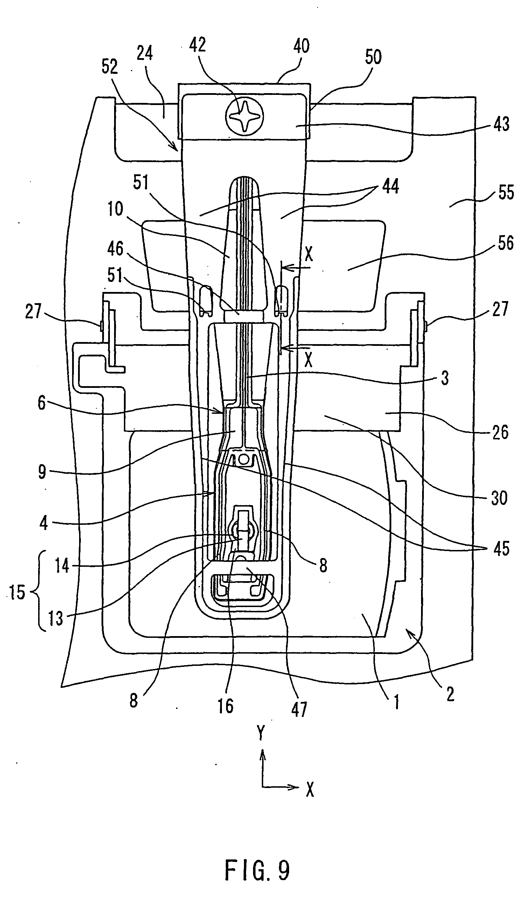

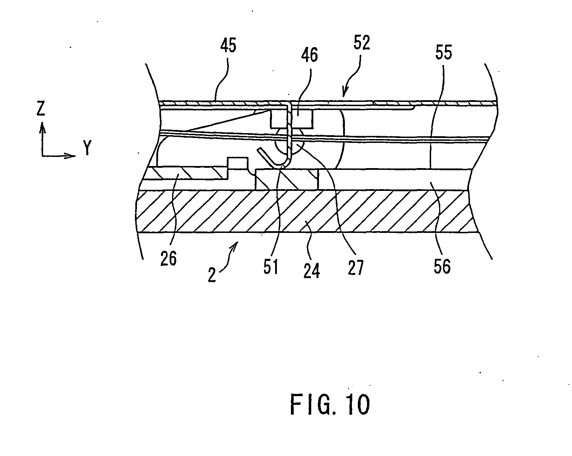

The following is a description of a magnetic head device according to a fourth embodiment of the present invention, with reference to FIGs. 9 to 10. FIG. 9 is a plan view of a major portion of a magnetic head device in the fourth embodiment of the present invention, and FIG. 10 is a sectional side view of the major portion of the magnetic head device shown in FIG. 9, taken along a line X-X and seen from an arrow direction.

In the magnetic head device of the fourth embodiment, a hole (a through hole) 56 is formed in a region of a cartridge holder 55 facing the portion of the bent first spring system 10 that is located closest to the magneto-optical disk 1 when the magnetic head 4 is in the first position.

When the magnetic head 4 is in the first position, the first spring system 10 of the supporting member 6 is bent so as to protrude toward the cartridge holder 55 and comes closer to the cartridge holder 55. The hole 56 is formed in the region of the cartridge holder 55 facing in the Z-axis direction the portion of the first spring system 10 that bends and comes closest to the cartridge holder 55. The range in the X-axis direction in which the hole 56 is formed corresponds to the range in which the portion of the first spring system 10 that comes closest to the cartridge holder 55 moves in the X-axis direction. When the magnetic head 4 is in the first position, the position holding portions 51 contact the cartridge holder 55.

Other structures and operations are similar to those in the first and second embodiments, and thus the description thereof will be omitted here.

As described above, in accordance with the magnetic head device of the fourth embodiment, since the hole 56 is formed in the region of the cartridge holder 55 facing the portion of the first spring system 10 that comes closest to the magneto-optical disk 1 when the magnetic head 4 is in the first position, the clearance between the supporting member 6 (especially, the first spring system 10 thereof) and the cartridge holder 55 increases. Thus, when the magnetic head 4 is in the first position, it is possible to expand the tolerable error range with respect to the variation in the bent amount of the first spring system 10, which is determined considering the avoidance of collision between the first spring system 10 and the cartridge holder 55. Therefore, the production yield of the supporting member 6 improves.

Other than the above, the present embodiment produces an effect similar to the first and second embodiments.

### (Fifth Embodiment)

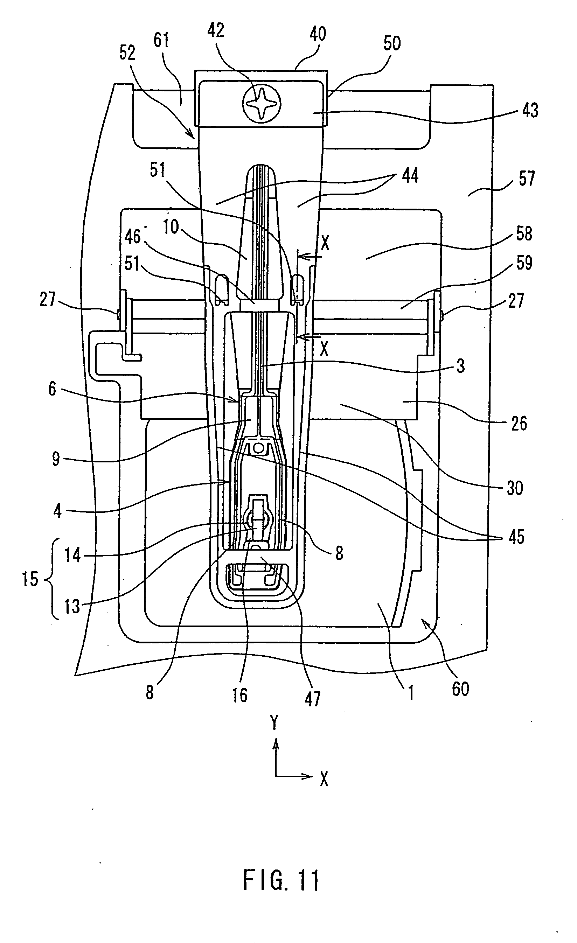

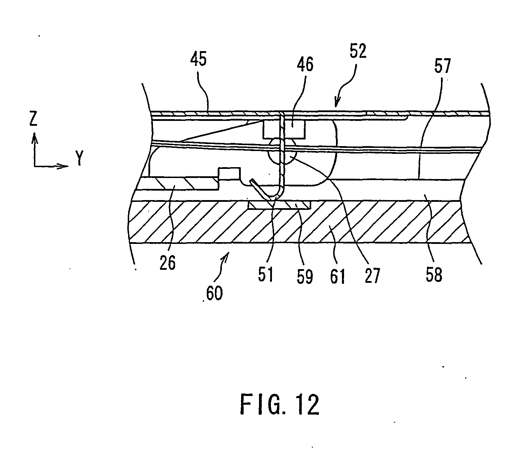

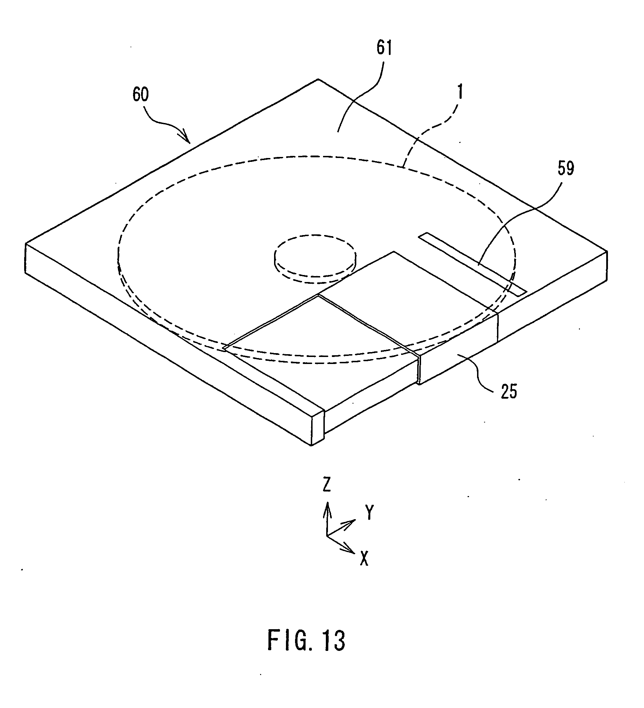

The following is a description of a magnetic head device according to a fifth embodiment of the present invention, with reference to FIGs. 11 to 13. FIG. 11 is a plan view of a major portion of a magnetic head device in the fifth embodiment of the present invention, FIG. 12 is a sectional side view of the major portion of the magnetic head device shown in FIG. 11, taken along a line X-X and seen from an arrow direction, and FIG. 13 is a perspective view of a cartridge used preferably in the magnetic head device of the fifth embodiment of the present invention.

In the magnetic head device of the fifth embodiment, a hole 58 is formed in a region of a cartridge holder 57 facing the position holding portions 51 and the portion of the bent first spring system 10 that is located closest to the magneto-optical disk 1 when the magnetic head 4 is in the first position. The range in the X-axis direction in which the hole 58 is formed corresponds to the range in which the portion of the first spring system 10 that comes closest to the cartridge holder 57 and the position holding portions 51 move in the X-axis direction. When the magnetic head 4 is in the first position, the position holding portions 51 pass through the hole 58 and then contact a backing portion 59 provided in a cartridge 60. The backing portion 59 is formed so as to be exposed below the hole 58 in the state where the cartridge 60 is mounted into the cartridge holder 57. When the position holding portions 51 move in the X-axis direction, they constantly slide on the backing portion 59.

The backing portion 59 is made of a material having excellent wear resistance and sliding characteristics, for example, iron or stainless steel and can be formed by integral molding with a cartridge main body 61 made of resin.

Other structures and operations are similar to those in the first and second embodiments, and thus the description thereof will be omitted here.

As described above, in accordance with the magnetic head device of the fifth embodiment, the clearance between the supporting member 6 (especially, the first spring system 10 thereof) and the cartridge holder 57 increases similarly to the fourth embodiment. Thus, when the magnetic head 4 is in the first position, it is possible to expand the tolerable error range with respect to the variation in the bent amount of the first spring system 10, which is determined considering the avoidance of collision between the first spring system 10 and the cartridge holder 57. Therefore, the production yield of the supporting member 6 improves.

Furthermore, when the magnetic head 4 is in the first position, even in the case where the position of the portion of the first spring system 10 that comes closest to the magneto-optical disk 1 and that of the position holding portions 51 match or are close to each other in the Y-axis direction, it is possible to secure the effect similar to the fourth embodiment described above by forming the hole 58. This increases the tolerance with respect to the bent and deformed shape of the first spring system 10 when the magnetic head 4 is in the first position, thus expanding the degree of freedom in designing the supporting member 6.

Also, when the magnetic head 4 is in the first position, the position holding portions 51 contact the backing portion 59 of the cartridge 60 instead of the cartridge holder 57, thereby achieving a still thinner magneto-optical recording/ reproducing apparatus.

Other than the above, the present embodiment produces an effect similar to the first and second embodiments.

Although the present embodiment has used the cartridge 60 provided with the backing portion 59, it also may be possible to use the cartridge 2 provided with no backing portion 59 illustrated in FIG. 19 so that the position holding portions 51 directly contact the cartridge 2.

Furthermore, the hole 58 formed in the cartridge holder 57 and the opening in which the head main body 5 is inserted may be provided independently of each other, or may be in communication with each other to form one opening.

The invention may be embodied in other specific forms without departing from the spirit or essential characteristics thereof. The embodiments disclosed in this application are to be considered in all respects as illustrative and not restrictive, the scope of the invention being indicated by the appended claims rather than by the foregoing description, all changes that come within the meaning and range of equivalency of the claims are intended to be embraced therein.

### Industrial Applicability

The magnetic head device of the present invention can be applied widely to information recording/ reproducing apparatuses on which a magnetic head is mounted, without any specific limitations. In particular, it is preferable that the magnetic head device of the present invention is used for portable equipment that needs to be thin, compact and lightweight. Also, it can be utilized in information recording/ reproducing apparatuses of not only a magneto-optical recording system but also a magnetic recording system.

## Claims

1. A magnetic head device comprising:
a cartridge holder for holding a cartridge in which an information recording medium is received;
a magnetic head comprising
a cantilevered supporting member having one end serving as a fastened end, the other end serving as a free end and a supporting member elastic portion between the fastened end and the free end, the fastened end being attached to a joint member moving in a direction substantially in parallel with a surface of the information recording medium, and
a head main body that is attached to the free end of the supporting member and applies a magnetic field to the information recording medium; and
a magnetic head holding member that is cantilevered by the joint member so as to extend from the joint member toward the head main body substantially in parallel with the surface of the information recording medium, is opposed to the information recording medium with the supporting member interposed therebetween and has an elastically deformable elastic spring portion near the joint member;
wherein the magnetic head has a first position in which the head main body is located close to or in contact with the information recording medium so as to perform recording or reproducing, a second position in which the head main body is away from the information recording medium and a third position in which the magnetic head and the information recording medium are inclined while being kept substantially in parallel with each other so as to allow the cartridge to be mounted into or removed from the cartridge holder,
the magnetic head holding member comprises a position holding portion protruding toward the information recording medium on the side of the joint member with respect to the head main body in a longitudinal direction of the magnetic head, and
when the magnetic head is in the first position, the position holding portion contacts the cartridge holder.

2. The magnetic head device according to claim 1, wherein the position holding portion is formed in one piece with the magnetic head holding member.

3. The magnetic head device according to claim 1, wherein when the magnetic head is in the first position, the supporting member elastic portion is bent, and a recessed portion or a hole is formed in a region of the cartridge holder facing a portion of the bent supporting member elastic portion that is located closest to the information recording medium in a direction perpendicular to the surface of the information recording medium.

4. The magnetic head device according to claim 1, wherein in the second position, the position holding portion is spaced away from the cartridge holder.

5. A magnetic head device comprising:
a cartridge holder for holding a cartridge in which an information recording medium is received;
a magnetic head comprising
a cantilevered supporting member having one end serving as a fastened end, the other end serving as a free end and a supporting member elastic portion between the fastened end and the free end, the fastened end being attached to a joint member moving in a direction substantially in parallel with a surface of the information recording medium, and
a head main body that is attached to the free end of the supporting member and applies a magnetic field to the information recording medium; and
a magnetic head holding member that is cantilevered by the joint member so as to extend from the joint member toward the head main body substantially in parallel with the surface of the information recording medium, is opposed to the information recording medium with the supporting member interposed therebetween and has an elastically deformable elastic spring portion near the joint member;
wherein the magnetic head has a first position in which the head main body is located close to or in contact with the information recording medium so as to perform recording or reproducing, a second position in which the head main body is away from the information recording medium and a third position in which the magnetic head and the information recording medium are inclined while being kept substantially in parallel with each other so as to allow the cartridge to be mounted into or removed from the cartridge holder,
the magnetic head holding member comprises a position holding portion protruding toward the information recording medium on the side of the joint member with respect to the head main body in a longitudinal direction of the magnetic head,
a hole is formed in a region of the cartridge holder where the movement of the joint member causes the position holding portion to move,
the cartridge is held in the cartridge holder, and when the magnetic head is in the first position, the position holding portion passes through the hole and then contacts the cartridge.

6. The magnetic head device according to claim 5, wherein the position holding portion is formed in one piece with the magnetic head holding member.

7. The magnetic head device according to claim 5, wherein when the magnetic head is in the first position, the supporting member elastic portion is bent, and the hole extends in a region of the cartridge holder facing a portion of the bent supporting member elastic portion that is located closest to the information recording medium in a direction perpendicular to the surface of the information recording medium.

8. The magnetic head device according to claim 5, wherein the cartridge comprises a backing portion on one surface thereof, the cartridge is held in the cartridge holder, and when the magnetic head is in the first position, the position holding portion passes through the hole and then contacts the backing portion.

9. The magnetic head device according to claim 5, wherein in the second position, the position holding portion is spaced away from the cartridge.
